# EUROPEAN PATENT SPECIFICATION

(11) **EP 1 703 678 B1**
(45) Date of publication and mention of the grant of the patent: **02.01.2008**
(21) Application number: 05102048.5
(22) Date of filing: 15.03.2005
(51) Int. Cl.: H04L 12/56, H04Q 7/22

(54) **Mobile Station registration and packet data service reconnect**
Registrierung und Wiederverbindung eines Paketdatendienstes in einer Mobilstation
Enregistrement et reconnexion d'un service de paquets de données dans une station mobile

(43) Date of publication of application: 20.09.2006
(73) Proprietor: Research In Motion Limited, Waterloo, Ontario N2L 3W8 (CA)
(72) Inventor: Willey, William Daniel, 94109, San Francisco, (US); Islam, M. Khaledul, K2K 3N4, Ottawa, (CA); Chaudry, Shahid R., K2K 3N4, Ottawa, (CA)
(74) Representative: Rickard, David John

(56) References cited:
- US-A1- 2003 099 219
- US-A1- 2004 063 431
- US-A1- 2004 071 112
- US-A1- 2004 184 436
- 3RD GENERATION PARTNERSHIP PROJECT 2 "3GPP2": "Upper Layer (Layer 3) Signaling Standard for cdma2000 Spread Spectrum Systems" 3GPP2 C.S0005-A, [Online] 1 June 1999 (1999-06-01), XP002345602 Retrieved from the Internet: URL:http://www.3gpp2.org/Public_html/specs /C.S0005-A.pdf> [retrieved on 2005-09-19]

## Description

The application relates to wireless systems and more particularly to registration and packet data connect.

To comply with the 3GPP2 CDMA packet data services standard "3GPP2 C.S0017-012-A v1.0: Data Service Options for Spread Spectrum Systems: Service Options 33 and 66" (also known as TIA-707.12-B), a mobile station with a dormant packet data session is required to "reconnect" its packet data service whenever it detects a change in System ID (SID), Network ID (NID) or Packet Zone ID (PZID) parameter associated with the wireless network. The reconnect process is required to maintain PPP (point-to-point protocol) connectivity in case the wireless network needs to move the so-called "R-P" interface (also known as A10 and All) between the Radio Access Network (RAN) and the Packet Data Servicing Node (PDSN) associated with the packet data service or in some cases needs to assign a new IP address to the mobile station. The reconnect process requires the mobile station to send an Origination message with Packet Data Service option and Data Ready to Send (DRS) bit set to 0. The wireless network may assign a traffic channel to the mobile station when the reconnect process takes place. A feature called "packet zone hysteresis" is included in 3GPP2 C.S0017-012-A v1.0 in order to minimize the number of reconnect attempts when the mobile station moves back and forth between two systems (such a SID/NID/PZID boundary). To implement the hysteresis feature, a mobile station keeps track of visited systems in a list which is called "Packet Zone List" in 3GPP2 C.S0017-012-A - each entry except the most recently added entry has an expiry timer. If a mobile station revisits a system whose timer has not expired yet and it does not have any data to send, then it refrains from reconnecting its data service until the hysteresis timer has expired.

To comply with the CDMA air-interface standard "3GPP2 C.S0005-Upper Layer (Layer 3) Signaling Standard for cdma2000 Spread Spectrum Systems" (also known as TIA200.0.5) a mobile station may be required to perform different types of access network registration. There are multiple revisions of 3GPP2 C.S0005 - the first one being 3GPP2 C.S0005-0 and the most recent one being 3GPP2 C.S0005-D. An example of a registration method which is common to all revisions of 3GPP2 C.S0005 is called "zone-based registration" in which the mobile station performs registration whenever it enters a zone that is not in the mobile station's zone list. Zones are uniquely identified by a zone number (REG_ZONE) in addition to the SID and NID of the zone.

United States Patent Application Publication US 2003/0099219 ("Abrol") relates to maintaining packet data connectivity in a wireless communications network. Abrol teaches techniques for maintaining packet data connectivity in a wireless communications network. A mobile station detects a change from a first packet control function (PCF) to a second PCF. The first PCF is connected to a first packet data service node (PDSN). The second PCF is connected to a second PDSN. The mobile station consults a database configures to map at least one previously visited PCF to a servicing PDSN. Based at least in part on the consulting, the mobile station observes one from among a plurality of predetermined origination patterns, wherein an origination pattern defines origination functions to be performed by the mobile station. As such, zombie PPP and mobile IP instances may be detected and handled.

United States Patent Application Publication US 2004/0071112 ("Hsu") relates to a dormant handoff in a packet data network. Hsu teaches a Mobile unassisted dormant handoff in a wireless communication system supporting packet data communications. While in a dormant mode, a mobile node may change packet zones, wherein different packet zones are serviced by at least one different infrastructure element, without identifying the change to the system. The change in packet zone does not necessarily trigger establishment of a communication path for the mobile node until there is packet data ready for communication. In one embodiment, mobile assistance is adapted to the system, and is disabled at the mobile node by an indication in a system parameter message transmitted by the system and received by the mobile node.

### GENERAL

One broad aspect provides method for CDMA packet data services of registering or reconnecting a mobile communication unit comprising: observing network infrastructure behaviour of a defined type indicative of whether a traffic channel is established in response to a packet data service reconnect and recording the behaviour, the packet data service reconnect involving transmission of an origination message with Packet Data Service option and Data Ready to send bit set to zero; and in response to occurrence of an event triggering access network registration with a network infrastructure, selecting, as a function of previously recorded network infrastructure behaviour, between performing an access registration and performing a reconnect with implicit registration;

### Brief Description of the Drawings

Preferred embodiments will now be described with reference to the attached drawings in which:
Figure 1 is block diagram of a system in which both packet data service reconnect and access network registration must be performed;
Figure 2 is a block diagram of a system featuring a mobile station adapted to perform reconnect and registration in a co-ordinated manner;
Figures 3 through 5 are flowcharts of methods of performing registration and reconnect in a co-ordinated manner provided by embodiments of the application;
Figure 6 is an example of a table of a packet zone list;
Figure 7 is a flowchart of a method implemented by a network for performing co-ordinated reconnect and registration; and
Figure 8 is a flowchart of another method of performing registration and reconnect in a co-ordinated manner provided by an embodiment of the application;
Figures 9 through 10 are flowcharts of another method of performing registration and reconnect in a co-ordinated manner in accordance with an embodiment of the application; and
Figure 11 is a table of an example modified packet zone list in accordance with an embodiment of the application; and
Figure 12 is a flowchart of another method of performing registration and reconnect in a co-ordinated manner in accordance with an embodiment of the application.

### Description of preferred embodiments

The CDMA packet data service reconnect and the CDMA air-interface standard registration are not implemented cooperatively to produce an increased likelihood that a mobile station will be reachable in a given instant. For example, a CDMA air-interface standard registration zone boundary may also coincide with a SID/NID/PZID boundary. In such a case, it is possible that the mobile station will perform a zone-based registration after moving from a first registration zone to a second registration zone, but that the mobile station will not initiate packet data reconnect due to the fact that the new SID/NID/PZID was visited earlier and the associated hysteresis timer has not yet expired. Some networks may even terminate the existing R-P interface after the reception of the registration message in the new registration zone in order to handle potential dangling R-P resource issues. The removal of the R-P interface prior to establishment of the new R-P interface due to the lack of co-ordination between the registration process and the packet data service reconnect process may result in making the mobile station unreachable from the packet data perspective until the mobile station re-establishes the packet data connectivity. However, the mobile station may not be aware of the fact that the network has torn down an existing R-P interface. More particularly, if the mobile moves from the first zone to the second zone, a packet data reconnect will not occur until at least the hysteresis timer of the second zone expires. If the mobile station returns to the first zone before expiry of the hysteresis timer of the second zone, and the hysteresis timer for the first zone has not expired, a new R-P interface will not be established until the first zone hysteresis timer is expired. If there had not been a registration that resulted in the R-P interface in the first zone being torn down, the mobile station would have again been reachable after it returned to the first zone. Extended periods of time during which the mobile station is not reachable result in packet data for the mobile station being accumulated and then sent in a clumped manner to the always-on mobile station after it does become available.

The network shows a first PDSN (packet data service node) connected to two BSCs (base station controllers) 10,12. For some embodiments, it is assumed that a Packet Control Function (PCF) is collocated with BSC or resident with BSC functionality. Each BSC supports a respective wireless network. The details of this are not shown with the exception of a single BTS (base station transceiver) 30 shown under the control of BSC 10. The coverage area of BSC 10 has network identifier NID₁; the coverage area served by BSC 12 has network identifier NID₂. In the illustrated example, the coverage area of BSC 10 also has registration zone ID REGZONE₁ and the coverage area of BSC 12 has REGZONE₂. The overall area 29 through which packet service is provided by PDSN 14 has packet zone ID PZID₁. In the illustrated example, this area also has system ID SID₁ 26.

In the illustrated example, the network ID happens to be mapped one-to-one to the BSCs, but this may not necessarily be the case. There may be multiple BSCs having a single NID. Furthermore, in the illustrated example, the PZID₁ is one-to-one with the SID₁. More generally, this is not necessarily the case. A system ID will usually relate to multiple network IDs and the packet zone IDs will be independently mapped.

Also shown is a second PDSN 20 connected to a BSC 18 that operates within coverage areas having network ID NID₃, system ID SID₂ and packet zone ID PZID₂ 27.

A single mobile station MOBILE STATION 32 is shown within the coverage area of BTS 30. This mobile station has mobility and can move within different coverage areas and zones.

For mobile station 32, the relevant R-P interface is shown at 28 between PDSN 14 and BSC/PCF 10. The R-P interface transports user packet data from/to the mobile station and carries signalling messages. For example, it enables the mobile station 32 to be paged while it has a dormant packet data service.

To reiterate the problems with the behaviour resulting from the current standards, with C.S0005 zone-based registration, a mobile station will automatically register when it changes registration zones, for example when mobile station 32 moves from REGZONE₁ to REGZONE₂. If the change in registration zone coincides with a change in a SID/NID/PZID, then the change in registration zone will trigger the access network registration (i.e. the mobile station sends the C.S0005 Registration Message), and the change in the SID/NID/PZID will trigger a packet data service reconnect (i.e. the mobile station initiates the packet data reconnect by sending the C.S0005 Origination Message with the DRS field set to '0'), assuming that there is not an outstanding hysteresis timer for the new SID/NID/PZID. With this sequence of events, the mobile station is always reachable. This is the case for the movement of mobile station 32 from REGZONE₁ to REGZONE₂ because the network identifier also changes from NID₁ to NID₂.

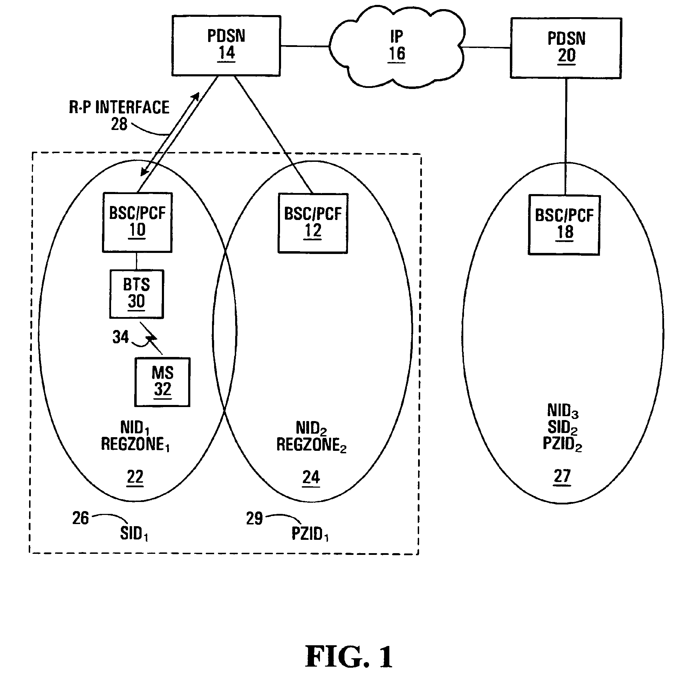

If, on the other hand the mobile station moves to a second registration zone that is not on the registration zone list, but there is no change in the SID/NID/PZID, then an access network registration will occur which may tear down the existing R-P interface, but no reconnect process will occur because there has been no change in the SID/NID/PZID. With such a scenario, the mobile station will not be reachable until it instigates a data transmission. This would be the case in Figure 1 where the area defined by REGZONE₂ to have the same network identifier as REGZONE₁.

A second problem is created due to the 3GPP2 C.S0017-012-A packet zone hysteresis. When a mobile station moves from the first registration zone REGZONE₁ to a second registration zone REGZONE₂ that is not on the registration zone list and simultaneously from a first SID/NID/PZID to a second SID/NID/PZID, an access network registration may be triggered that will tear down the R-P interface 28 within the first SID/NID/PZID. Assuming the mobile station has the new SID/NID/PZID in its packet zone list and it does not have any data to send, the mobile station will wait until the expiry of the hysteresis timer associated with the new SID/NID/PZID before issuing a packet data service reconnect by sending the C.S0005 Origination Message with the DRS field set to '0'. If, before the expiry of that hysteresis timer, the mobile station returns to the original SID/NID/PZID, then until the expiry of the hysteresis timer for that SID/NID/PZID, there will not be a packet data service reconnect. Note that in the absence of an access network registration when the mobile station moved from the first SID/NID/PZID to the second SID/NID/PZID, the R-P interface for the first SID/NID/PZID would not have been torn down, and when the mobile station returned to the first SID/NID/PZID it would have again immediately been reachable.

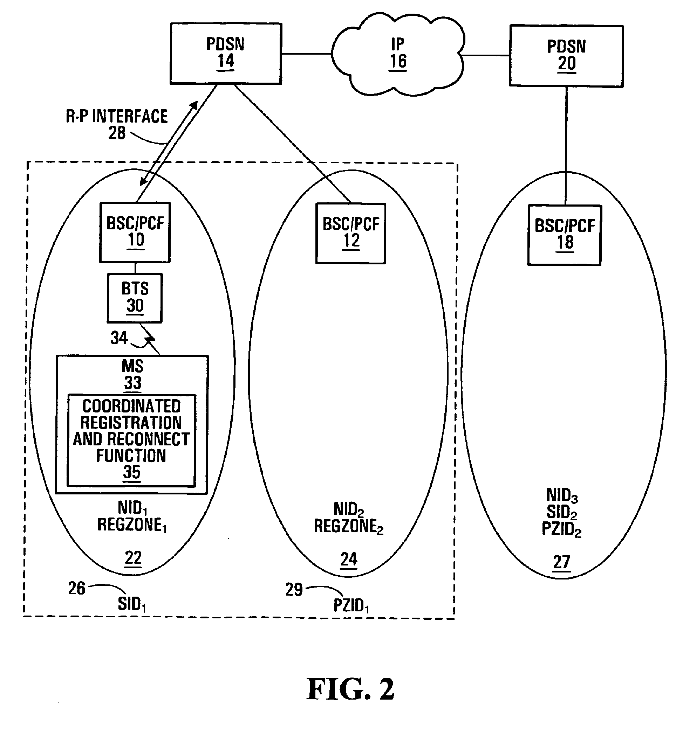

An embodiment of the application will now be described with reference to an example network depicted in Figure 1. With the embodiment of Figure 2, the network is the same as that shown in Figure 1. However, shown is a mobile station 33 equipped with a co-ordinated registration and reconnect function 35. The behaviour of the co-ordinated registration and reconnect function 35 will be described in detail below with various examples. This function can be implemented as part of the software residing on the mobile station 33; it can be implemented in hardware or firmware; alternatively it can be implemented as an appropriate combination of software, hardware and firmware. Also, while shown is a discrete functional element 35, it is to be understood that it can also be implemented by making a series of modifications to software that is compliant with existing standards. For example, existing mobile stations have the capability to comply with 3GPP2 C.S0005 for the air-interface and 3GPP2 C.SO017-012-A for packet data services. The co-ordinated registration and reconnect function 35 can be embodied through of series of one or more changes to the otherwise standard compliant functionality.

It is to be very clearly understood that the network depicted in Figure 2 is for the purpose of example and explanation only. An arbitrary arrangement of components is contemplated. Furthermore, the BSC/PCF, BTS hierarchy within a given network is but one example of a method of providing the air-interface through to a mobile station. Other hierarchies may alternatively be implemented. For different implementations, there still will be a registration interface, through the BTS and BSC in the illustrated example for the CDMA air-interface, and there is an R-P interface 28 for the CDMA packet data service or equivalent shown between the PDSN 14 and BSC/PCF 10 in the example.

In a first embodiment, whenever any event triggers an access network registration (see for example 2.6.5.1 of 3GPP2 C.S0005-D) of the following types (timer-based, zone-based, parameter-change, distance-based, or user zone-based) the mobile station will check to see if there is a system entry in its packet zone list with an unexpired hysteresis timer that matches the SID/NID/PZID of the current zone.

If there is one, the mobile station performs a reconnect procedure instead of registration and resets the associated hysteresis timer. The reconnect process constitutes sending an Origination Message which is considered as an "implicit" registration as per the 3GPP2 C.S0005 standard. In the event the mobile station is required to register and reconnect (e.g. entry to a new zone that is not on mobile station's zone list or packet zone list), the mobile station only performs the reconnect procedure.

It is noted that it is preferred for the mobile station to perform the reconnect procedure instead of the registration. However, in 3GPP2 C.S0005-D for two types of access network registrations using the Registration Message, the associated necessary fields are currently missing from the Origination Message, thus creating a problem for these two types of registrations. For the encryption re-sync required Registration, there is a registration type (REG_TYPE) field in the 3GPP2 C.SO005-D Registration Message which tells the base station that the mobile is registering due to encryption re-sync being required; no equivalent field exists in the Origination Message. Similarly, for Broadcast Multicast (BCMC) Registration, when the mobile needs to change the BCMC frequency, it includes the following fields in the Registration Message to indicate the new BCMC frequency: BCMC frequency information included indicator (BCMC_FREQ_INFO_INCL), BCMC Band Class (BCMC_BAND_CLASS), and BCMC Frequency (BCMC_CDMA_FREQ); no equivalent fields exist in the Origination Message. Since fields are missing from the Origination Message, for an encryption re-sync required Registration and for a BCMC Registration including a frequency change, it will be necessary to send both the Registration message and the Origination Message used for packet data reconnect. Alternatively, if the Origination Message were modified to include a field to indicate to the base station that the mobile station requires an encryption re-sync (this could be by adding the REG_TYPE field to the Origination Message or could be by adding another field such as a one-bit indicator field), the mobile could send only the Origination Message used for packet data reconnect when the registration is an encryption re-sync required registration. Similarly, if the Origination Message were modified to include fields for the new BCMC frequency (BCMC frequency information included indicator, BCMC Band Class, and BCMC Frequency, or their equivalents) the mobile could send only the Origination Message used for packet data reconnect when the registration is a BCMC frequency change registration. It should also be noted that three types of registrations present special cases for which packet data reconnect is not required at all. If the registration is either a power-up registration, power-down registration, or an ordered registration, packet data reconnect will not be needed and the mobile station can just send the Registration Message.

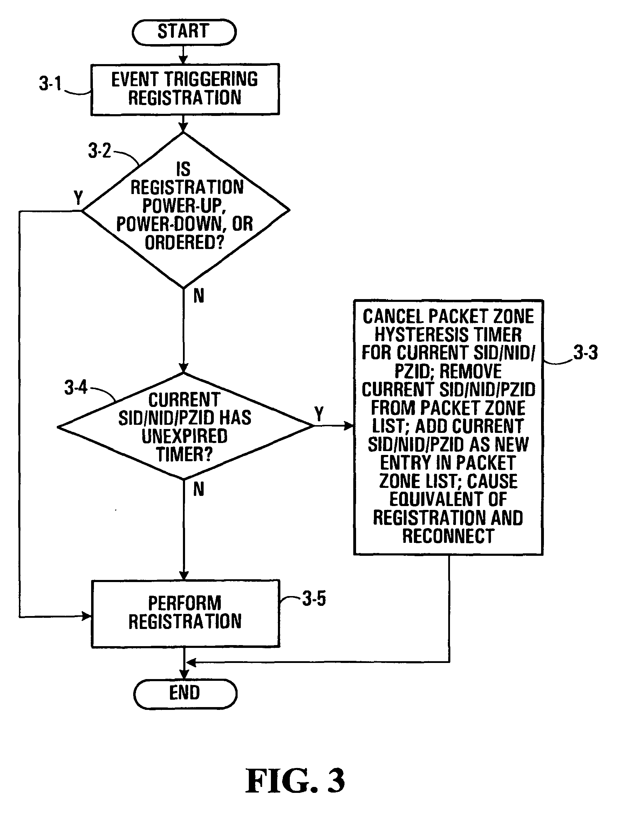

There are many ways to achieve this result. In a first example, shown in the flowchart of Figure 3, the new behaviour is shown from the perspective of registration with the assumption that a conventional packet zone hysteresis-based reconnect is running in the background. At step 3-1, an event triggering registration occurs. At step 3-2, a check is made to see if the registration is a power-up registration, a power-down registration, or an ordered registration. If the registration was any of these types, yes path step 3-2, then at step 3-5, an access network registration is performed by sending a Registration Message. Alternatively, if the registration is not one of these types, no path step 3-2, processing continues at step 3-4. At step 3-4, a check is made to see if there is an active hysteresis timer for the current SID/NID/PZID. If there is not an active hysteresis timer for the current SID/NID/PZID, no path step 3-4, then at step 3-5 an access network registration is performed by sending a Registration Message. Alternatively, if there is an active hysteresis timer for the current SID/NID/PZID, yes path step 3-4, then at step 3-3, the mobile station causes the equivalent of an access network registration and a packet data service registration to be performed. This can take the form of an explicit registration (i.e. the mobile station sends a Registration Message) followed by a packet data reconnect; a packet data reconnect only with an implicit registration, or a registration modified to include an indication that a reconnect is also to be performed. At step 3-3, the choice of whether to send only the Origination Message used for packet data reconnect or to send both the Registration Message and the Origination Message used for packet data reconnect can be based upon the Registration type. For example if the registration type is either encryption re-sync registration or BCMC registration then both the Registration Message and the Origination message used for packet data reconnect are sent; otherwise only the Origination Message used for packet data reconnect is sent. At step 3-3, packet zone list maintenance functions are also performed consisting of cancelling the hysteresis timer for the current SID/NID/PZID, removing the current SID/NID/PZID from the packet zone list, and adding the current SID/NID/PZID as the newest entry in the packet zone list without a timer. More generally, the mobile station modifies the packet zone list to reflect that the current zone is the most recent zone.

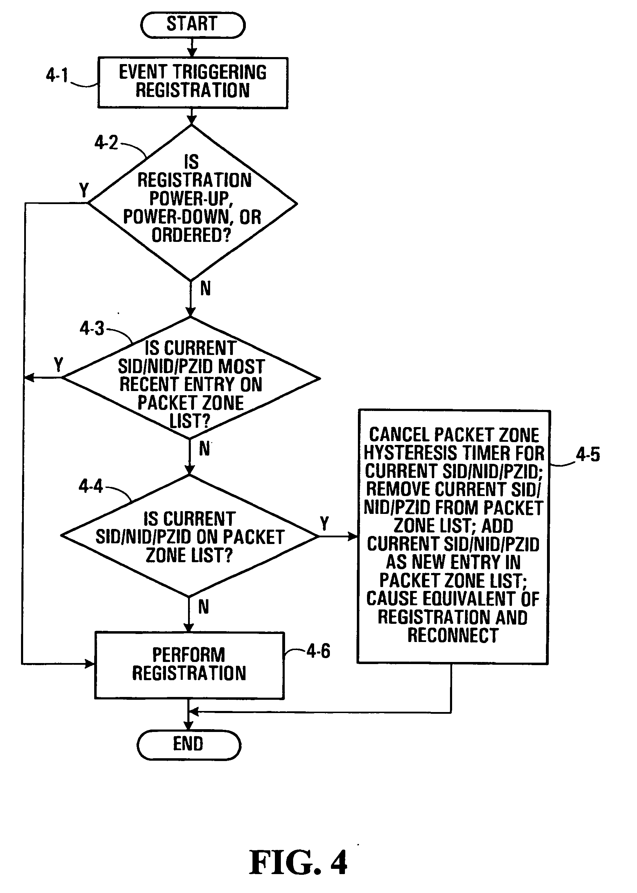

In another embodiment, the new behaviour can be shown from the perspective of the entries in the Packet Zone list when hysteresis is active. This is shown in Figure 4. At step 4-1, an event triggering registration occurs. At step 4-2, a check is made to see if the registration is a power-up registration, a power-down registration, or an ordered registration. If the registration was any of these types, yes path step 4-2, then at step 4-6, an access network registration is performed by sending a Registration Message. Alternatively, if the registration is not one of these types, no path step 4-2, processing continues at step 4-3. At step 4-3, a check is made to see if the current SID/NID/PZID corresponds to the most recent entry on the packet zone list. If the current SID/NID/PZID corresponds to the most recent entry on the packet zone list, yes path step 4-3, this means that the mobile station already has a packet data connection for the current SID/NID/PZID and thus packet reconnect is not required, so processing continues at step 4-6 where an access network registration is performed by sending a Registration Message. If the current SID/NID/PZID does not correspond to the most recent entry on the packet zone list, no path step 4-3, processing continues at step 4-4. At step 4-4, a check is made to see if the current SID/NID/PZID is on the packet zone list. If the current SID/NID/PZID is not on the packet zone list, no path step 4-4, then at step 4-6 an access network registration is performed by sending a Registration Message. Alternatively, if the current SID/NID/PZID is on the packet zone list, yes path step 4-4, then at step 4-5, the mobile station causes the equivalent of an access network registration and a packet data service registration to be performed. This can take the form of an explicit registration (i.e. the mobile station sends a Registration Message) followed by a packet data reconnect; a packet data reconnect only with an implicit registration, or a registration modified to include an indication that a reconnect is also to be performed. At step 4-5, the choice of whether to send only the Origination Message used for packet data reconnect or to send both the Registration Message and the Origination Message used for packet data reconnect can be based upon the Registration type. For example if the registration type is either encryption re-sync registration or BCMC registration then both the Registration Message and the Origination Message used for packet data reconnect are sent; otherwise only the Origination Message used for packet data reconnect is sent. At step 4-5, packet zone list maintenance functions are also performed consisting of cancelling the hysteresis timer for the current SID/NID/PZID, removing the current SID/NID/PZID from the packet zone list, and adding the current SID/NID/PZID as the newest entry in the packet zone list without a timer.

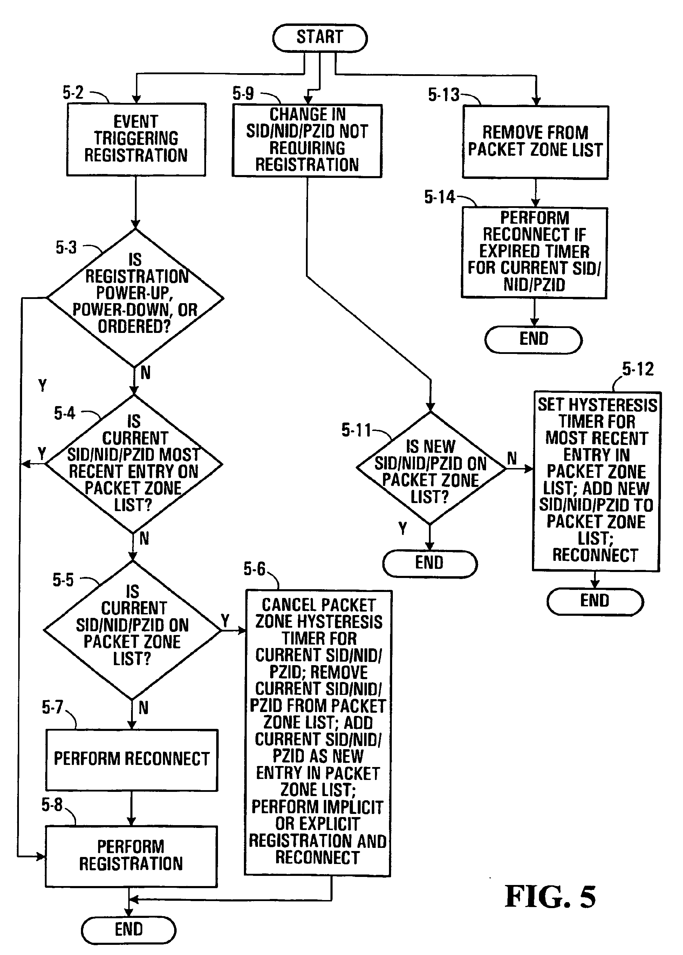

Figure 5 is a flowchart of a new integrated reconnect/registration method. The method starts with one of three events, namely an event triggering one registration in step 5-2, a change in SID/NID/PZID not requiring registration in step 5-9, or the expiry of a hysteresis timer in step 5-13.

If it is an event triggering registration step 5-2, processing continues at step 5-3 where a check is made to see if the registration is a power-up registration, a power-down registration, or an ordered registration. If the registration was any of these types, yes path step 5-3, then at step 5-7, a registration is performed by sending a Registration Message. Alternatively, if the registration is not one of these types, no path step 5-3, processing continues at step 5-4. At step 5-4, a check is made to see if the current SID/NID/PZID corresponds to the most recent entry on the packet zone list. If the current SID/NID/PZID corresponds to the most recent entry on the packet zone list, yes path step 5-4, this means that the mobile station already has a packet data connection for the current SID/NID/PZID and thus packet reconnect is not required, so processing continues at step 5-7 where a registration is performed by sending a Registration Message. If the current SID/NID/PZID does not correspond to the most recent entry on the packet zone list, no path step 5-4, processing continues at step 5-5. At step 5-5, a check is made to see if the current SID/NID/PZID is on the packet zone list. If the current SID/NID/PZID is not on the packet zone list, no path step 5-5, then at step 5-7 a reconnect is performed (consistent with normal packet zone reconnection behaviour since there has been a change in SID/NID/PZID) and a registration is performed at step 5-8 by sending a Registration Message. Alternatively, if the current SID/NID/PZID is on the packet zone list, yes path step 5-5, then processing continues at step 5-6. At step 5-6 the hysteresis timer for the current SID/NID/PZID is cancelled, the current SID/NID/PZID is removed from the packet zone list, and the current SID/NID/PZID is added as a new entry to the packet zone list. It should be noted that before adding a new entry to the packet zone list the mobile station sets the packet zone hysteresis timer for the most recently added entry in the list as described in C.S0017-012-A v1.0 section 2.2.5. Continuing step 5-6, the mobile station causes the equivalent of an access network registration and a packet data service registration to be performed. This can take the form of an explicit registration (i.e. the mobile station sends a Registration Message) followed by a packet data reconnect; a packet data reconnect only with an implicit registration, or a registration modified to include an indication that a reconnect is also to be performed. At step 5-6, the choice of whether to send only the Origination Message used for packet data reconnect or to send both the Registration Message and the Origination Message used for packet data reconnect can be based upon the Registration type. For example if the registration type is either encryption re-sync registration or BCMC registration then both the Registration Message and the Origination Message used for packet data reconnect are sent; otherwise only the Origination Message used for packet data reconnect is sent.

In another embodiment, steps 5-7 and 5-8 can be combined in any manner that results in the equivalent of both a registration and a reconnect being performed. As outlined previously, this might consist of a reconnect with implicit registration.

On the other hand, if the initial event was a change in SID/NID/PZID not requiring registration, step 5-9, then packet zone list processing continues at step 5-11. At step 5-11, if the new SID/NID/PZID is on the packet zone list, yes path step 5-11, then nothing is done as either the mobile station is already connected to the current SID/NID/PZID (i.e. the current SID/NID/PZID is the most recent entry on the list) or the hysteresis timer is being counted down for that SID/NID/PZID and a reconnect will not occur until that timer expires. On the other hand, if the new SID/NID/PZID is not on the packet zone list, no path step 5-11, then at step 5-12, the packet zone hysteresis timer for the most recently added entry in the packet zone list is activated as described in C.S0017-012-A v1.0 section 2.2.5, the new SID/NID/PZID is added to the packet zone list, and reconnect is performed at step 5-12.

Finally, if the initial event was the expiry of a hysteresis timer, then the SID/NID/PZID is removed from the packet zone list at step 5-13. A reconnect is performed at step 5-14 if the timer of the current SID/NID/PZID expired.

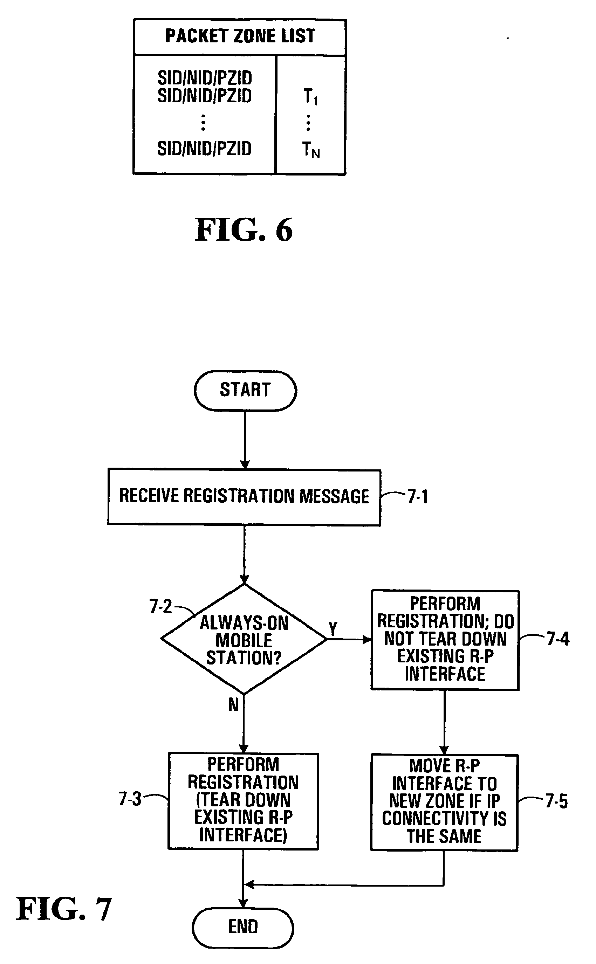

An example of a packet zone list used when hysteresis is active is shown in Figure 6 where various SID/NID/PZID entries are shown with respective hysteresis timers T₁,... T_{N}. The entries in the list are ordered from the newest on the top to the oldest on the bottom. The newest entry in the packet zone list (the topmost entry) does not have an active hysteresis timer. Before a new entry is added to the packet zone list, a hysteresis timer is activated for the newest entry currently in the list and then the new entry is added without an active hysteresis timer. It is to be clearly understood that the list shown is a very specific example. The point of hysteresis is to not immediately reconnect after changing packet zones to a zone that was previously visited within some time interval. There are many logically equivalent ways of achieving this function without necessarily implementing a list, or implementing timers.

For all of the above methods, as discussed previously, wherever the equivalent of both a registration and a reconnect are to be performed, any of the four previously introduced behaviours can be executed. These include performing a registration and then a reconnect; performing a reconnect and also an implicit registration; performing a registration using a new version of the registration message that includes one or more parameters that indicate reconnect is to also be performed; performing a reconnect that includes one or more parameters for use in registration. For some of these options, a change will also need to be implemented on the network side. In particular, in the event a new registration message is employed that indicates one or more parameters which indicates reconnect is also to be performed, the base station controller will need to be modified to understand this message and act accordingly. Similarly, for an embodiment featuring the use of a reconnect message that includes one or more parameters for use in registration, the base station controller will also need to be modified to understand the new parameters and to act accordingly.

Referring now to Figure 7, shown is another embodiment that achieves a similar effect, but does not necessarily require changes to be made to the mobile station. In this embodiment, a change is made in the behaviour of the network side in processing registration messages. At step 7-1, the network (for example a BSC or BTS) receives a registration message. The network then checks to see if the message was received from an always-on mobile station at step 7-2. For example, an attribute may be retrieved from the AAA and maintained in the radio access network, for example in the BSC/PCF, for each mobile station to indicate whether or not it is an always-on mobile station. If it is not an always-on mobile station, no path step 7-2, then step 7-3 is performed which consists of performing a normal registration and this may involve tearing down the existing R-P interface. On the other hand, if the mobile station is an always-on mobile station, yes path step 7-2, then step 7-4 is executed. This consists of performing registration, but in so doing not tearing down the existing R-P interface. In a variant of this, step 7-5 can be performed. This consists of performing registration and moving the R-P interface to the new zone if the IP connectivity is the same. The functionality of Figure 7 is preferably implemented in software in the base station controller. However, other implementations such as hardware, software, firmware are also contemplated. Also, this functionality could be implemented in a component other than a base station controller.

The detailed examples presented above assume that packet data service reconnect occurs across changes in SID/NID/PZID. More generally, reconnect is considered to occur across changes in packet data service reconnect zone. The reconnect zone does not have to be an actual parameter. In the particular examples given, any time any one of SID/NID/PZID changes, the reconnect zone changes. Other reconnect triggers are contemplated.

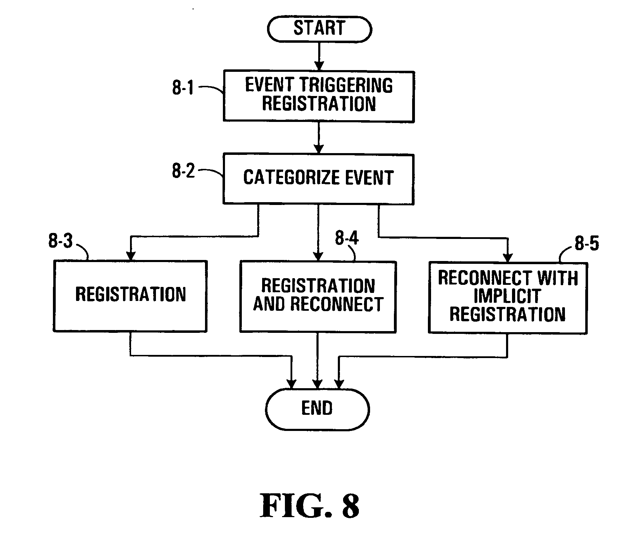

Referring now to Figure 8, in another embodiment, a method implemented in the mobile station involves first the occurrence of an event triggering registration at step 8-1. The event is categorized at step 8-2. Three different categorizations are shown, these including a first category for which only registration is performed at step 8-3; a second category for which registration and reconnect are performed at step 8-4, and a third category for which reconnect with implicit registration is performed. For the third category, in some embodiments the reconnect is performed with additional parameters to support particular registration types.

In a specific implementation, if the mobile station determines that a registration is required to a base station for which a packet zone hysteresis timer is active, the mobile station cancels the packet zone hysteresis timer, removes the entry from the packet zone list, adds the entry as a new entry in the packet zone list, and initiates a packet zone based reconnection by sending an Origination Message (preferably with DRS=0) if the required registration is of any of a set of defined types. In one embodiment the types are: timer-based, zone-based, parameter-change, distance-based, or user zone-based. Furthermore, in some embodiments, if the mobile station determines that a registration is required to a base station for which a packet zone hysteresis timer is active, the mobile station performs the registration, cancels the packet zone hysteresis timer, removes the entry from the packet zone list, adds the entry as a new entry in the packet zone list, and initiates a packet zone based reconnection by sending an Origination Message (preferably with DRS=0) if the required registration is of any of a set of defined types. In one embodiment, the types are: encryption re-sync required, or BCMC Registration.

In the above, it may not be necessary to explicitly cancel the hysteresis timer given that the entry has been removed from the packet zone list. This is an implementation decision.

The application has provided several examples of combining an access network registration with a packet data service reconnect when performing a registration in a packet data service reconnect zone having an active hysteresis timer. In some embodiments, network infrastructures have a mechanism for handling access network registrations and packet data service reconnects when they are not combined. For example, some network infrastructures wait for a certain time duration after an access network registration for a packet data service reconnect before tearing down an R-P interface. Nonetheless, there are many situations in which it may be preferred to combine an access network registration with a packet data service reconnect. For example, combining the reconnect and registration into one message is always more efficient when the network infrastructure does not set up a traffic channel upon a packet data reconnect. On the other hand, there are situations in which it may be less efficient for the mobile station to combine these messages. For example, if a network infrastructure avoids tearing down an R-P interface upon receiving an access network registration and sets up a traffic channel upon receipt of an origination message even if the mobile has no data to send, then performing a packet data reconnect may be less efficient than performing an access network registration since a traffic channel is not needed by the mobile station.

Different network infrastructures may have functional variations causing different behaviour, especially when they are manufactured by different manufacturers. For example, when a mobile station sends an origination message with DRS=0 in part of a packet data reconnect meaning that there is no data to send and no actual need for a traffic channel, some network infrastructures nonetheless set up a traffic channel for the mobile station while others do not. To respond to the origination message upon setting up a traffic channel, the network infrastructure sends a channel assignment message on a control channel to the mobile station in order to inform the mobile station that a traffic channel is being established. To respond to the origination message by not setting up a traffic channel, the network infrastructure sends a release message on the control channel to the mobile station. Upon receipt of the release message, the mobile station can stop continuously monitoring the control channel for receipt of the channel assignment message.

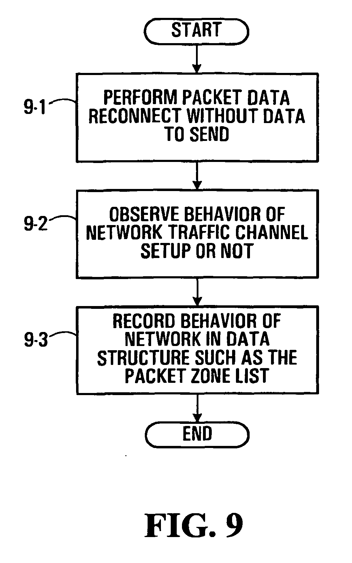

An embodiment of the application provides methods by which a mobile station performs registrations and reconnects in a co-ordinated manner as a function of the behaviour of the network infrastructure. A particular example of the behaviour of the network infrastructure is whether or not it assigns a traffic channel to the mobile station upon receipt of an origination message with DRS=0. Shown in Figures 9 through 10 are flowcharts of another method of performing registration and reconnect in a co-ordinated manner in accordance with an embodiment of the application. One or more, preferably all, of these methods may be implemented in a mobile station, for example, by the co-ordinated registration and reconnect function 35 of the mobile station 33 shown in Figure 2.

Turning now to Figure 9, shown is a flowchart of a method of acquiring behaviour information from a network infrastructure in accordance with an embodiment of the application. If the mobile station executes a packet data reconnect but does not have any data to send (indicated for example by setting DRS=0 in an origination message) at step 9-1, then at step 9-2 the mobile station observes the behaviour of the network infrastructure. In particular, the mobile station observes whether or not a traffic channel is to be set up. Once the mobile station has observed the behaviour of the network infrastructure, it records the behaviour at step 9-3. Such behaviour is recorded to the resolution of the packet data service reconnect zones described previously.

There are several possible ways in which the mobile station observe can observe whether or not a traffic channel is to be set up at step 9-2. For example, the mobile station can monitor a control channel for receipt of a channel assignment message or a release message. The mobile determines that a traffic channel will not be set up if it receives a release message or sometimes a service status order in TIA-2000-D. The mobile determines that a traffic channel is to be set up if it receives a channel assignment message.

In some embodiments, until the mobile station has observed the behaviour of the network infrastructure, the mobile station assumes a default behaviour. Assuming a default behaviour may be beneficial for example if the mobile station has not been able to observe the behaviour of the network infrastructure. For example, if the mobiles station has data to send at the time of reconnect it would set DRS=1 in the origination message and would therefore not be able to observe the network behaviour. In some embodiments, the initial default behaviour assumes that the network infrastructure establishes a traffic channel and sends a channel assignment message. In other embodiments, the initial default behaviour assumes that the network infrastructure does not establish a traffic channel and instead sends a release message.

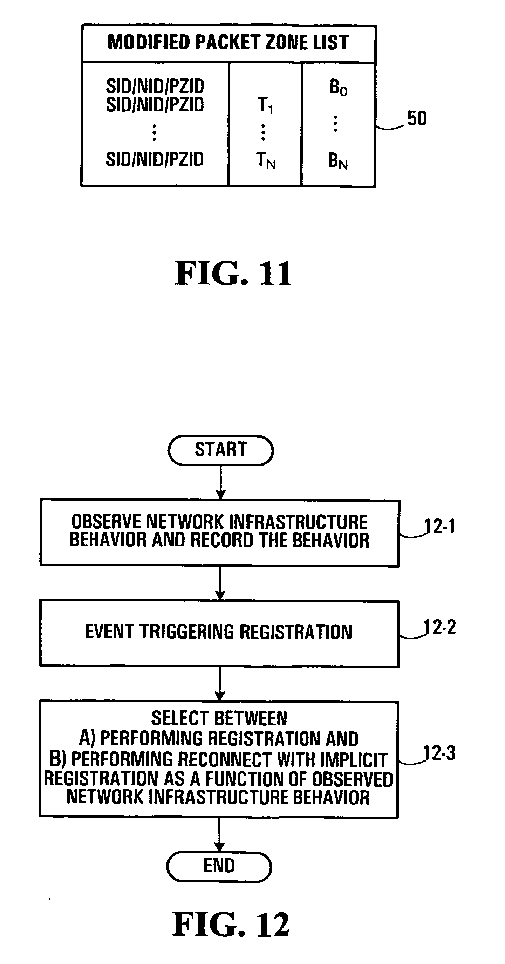

There are numerous ways in which the mobile station can record the behaviour at step 9-3. For example, any appropriate data structure can be implemented for recording the behaviour. As a specific data structure example, the mobile station can record the behaviour in a modified packet zone list. Referring to Figure 11, a table of an example modified packet zone list in accordance with an embodiment of the application is shown. The modified packet zone list preferably has all of the features seen in the packet zone list shown in Figure 6. However, each entry additionally includes an additional column 50 containing an identification of whether or not the respective network infrastructure assigns a traffic channel to the mobile station upon receipt of an origination message with DRS=0. These entries are shown as binary entries B₀ through B_{N} in the illustrated example. In some embodiments, an entry is removed from the modified packet zone list whenever its respective hysteresis timer expires. In other embodiments, the entry is not removed and instead an identification that its respective hysteresis timer has expired is maintained. In this embodiment, the modified packet zone list can maintain an identification of network infrastructure behaviour in an entry even after its respective hysteresis timer has expired. However, preferably the behaviour is deleted at the same time the hysteresis timer expires. If the hysteresis timer expires, then the mobile station will have to perform a packet data service reconnect anyway if it returns to that zone and it will therefore have a chance to store the behaviour. Storing the behaviour after expiry of the hysteresis timer unnecessarily consumes memory in the mobile station.

In some embodiments, the behaviour of a network infrastructure can change. For example, at a first instance a network infrastructure could assign a traffic channel upon receiving an origination message with DRS=0 while at a second instance the network infrastructure does not. This could happen for example when software on the network infrastructure is changed or upgraded. If the mobile deletes the behaviour of network infrastructures upon expiry of their hysteresis timers, then the mobile station will not accumulate out of date behaviour for network infrastructures that have had software upgrades.

The number of packet data service reconnect zones that the mobile station maintains a record of network infrastructure behaviour is implementation specific. In some embodiments, this number may be greater than the number of packet data service reconnect zones that the mobile station maintains an identification of being previously visited for the purposes of hysteresis.

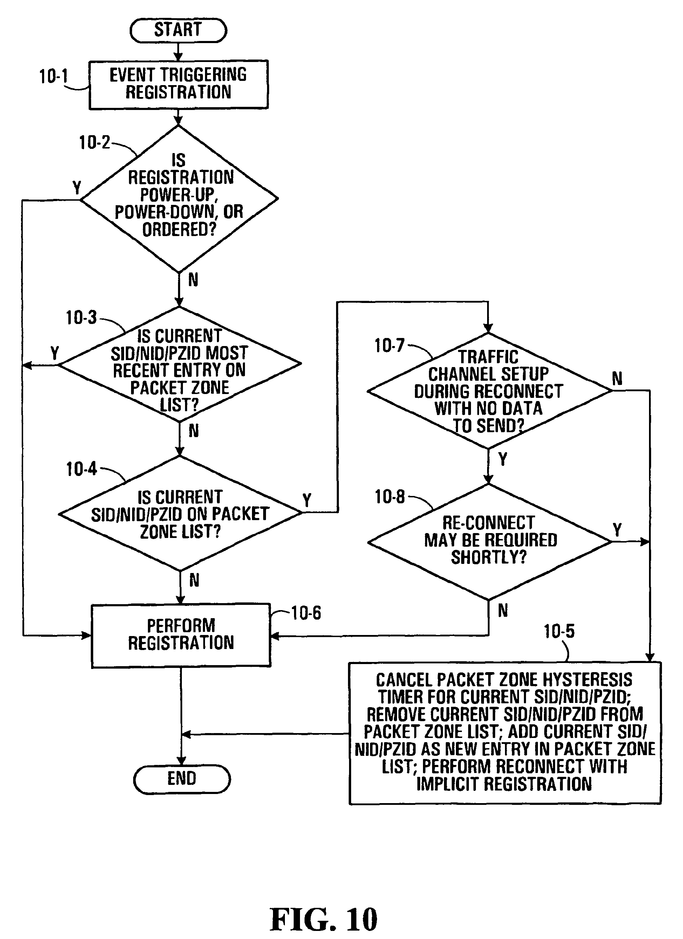

Turning now to Figure 10, shown is a flowchart of another method of performing registration and reconnect in a co-ordinated manner in accordance with an embodiment of the application. Steps 10-1 through 10-3 and 10-6 are substantially identical to steps 4-1 through 4-3 and 4-6 in Figure 4. Therefore, their descriptions will not be repeated. At step 10-4, a check is made to see if the current SID/NID/PZID is on the packet zone list. If the current SID/NID/PZID is not on the packet zone list, no path step 10-4, then at step 10-6 an access network registration is performed by sending a registration message. If the mobile station is in a new SID/NID/PZID, then a packet data reconnect would also be performed in accordance with conventional behavior. Alternatively, the reconnect and registration can be combined in this case as well. If the current SID/NID/PZID is on the packet zone list, yes path step 10-4, then at steps 10-7 and 10-8 the mobile station determines whether an access network registration should be performed or a packet data service reconnect with implicit registration should be performed. At step 10-7, the mobile station determines whether or not the current network infrastructure sets up a traffic channel in response to a reconnect attempt when there was no data to send (for example upon receipt of an origination message with DRS=0). The mobile station determines this based on its recorded behavior of the current network infrastructure, preferably recorded to the resolution of packet data service reconnect zone.

If the mobile station determines that the current network infrastructure does not assign a traffic channel under these circumstances, then the mobile station will perform a packet data service reconnect with implicit registration at step 10-5. However, if the mobile station determines that under these circumstances, the current network infrastructure does assign a traffic channel, then the mobile station may decide to perform only an access network registration at step 10-6. In particular, the mobile station determines at step 10-8 whether or not the current packet data service reconnect zone has an active hysteresis timer that is close to expiring, or more generally whether a packet data service reconnect for the current packet data service reconnect zone may be required shortly. If so, then the mobile station will perform a packet data service reconnect with implicit registration at step 10-5 since the mobile station may have to perform a packet data reconnect shortly if it performs only an access network registration. However, if the mobile station determines that the current packet data service reconnect zone does not have an active hysteresis timer that is close to expiring, more generally does not need to perform a packet data service reconnect zone shortly, then the mobile station will perform only an access network registration at step 10-6.

There are several ways in which the mobile station can determine that an active hysteresis timer is close to expiry. As a specific example, the mobile station can consider an active hysteresis timer to be close to expiry when expiry is expected within 5 seconds. As another specific example, the mobile station can consider an active hysteresis timer to be close to expiry when expiry is expected within 10 seconds.

It can be seen that in order for a packet data service reconnect with implicit registration to be performed, one of two conditions must be satisfied. The first condition is that the network infrastructure is known from previous behavior to not set up a traffic channel upon a packet data service reconnect when there is no data to send. The second condition is that the network infrastructure is known from previous behavior to set up a traffic channel, and the mobile station is in a packet data service reconnect zone for which the mobile station is maintaining an active hysteresis timer that is near expiry. If neither of these two conditions are satisfied, then an access network registration is performed at step 10-6. Preferably, both additional steps 10-7 and 10-8 are implemented so as to check both conditions. However, it is to be understood that it is possible to implement step 10-7 without implementing step 10-8. While these new conditions have been described in the context of Figure 10 which is a modified version of Figure 4, in other embodiments, these new conditions are applied to other previously described embodiments, such as those of Figures 3,4,5 and 8. For example, if the method shown in Figure 8 includes both of the additional conditions, then when an event is categorized at step 8-2 the mobile station will apply both additional conditions in order to determine whether or not the mobile station should perform an access network registration at step 8-3 or a packet data service reconnect with implicit access network registration at step 8-5.

With reference to Figures 9 to 11, a series of very specific methods have been described in which the mobile station performs, as a function of previously recorded network behaviour, either an access network registration or a packet data service reconnect with implicit registration. The particular examples have focused on network infrastructure behaviour in setting up a traffic channel in the current packet data service reconnect zone or not when performing a packet data service reconnect without data to send. More generally, with reference to Figure 8, one of the factors that can be used in categorizing the event can be any defined type of previously recorded network behavior, the behaviour during a packet data service reconnect being only one very specific example. In such embodiments, part of the step of categorizing the event 8-2 will involve considering the previously recorded network behaviour.

More generally still, referring to Figure 12, a method is provided that involves first observing network infrastructure behaviour and recording the behaviour at step 12-1. This is at some time later an event triggering registration occurs at step 12-2. At step 12-3, the mobile station selects, as a function of observed network infrastructure behaviour, between a) performing registration and b) performing reconnect with implicit registration. It is noted that not necessarily all events triggering registration need trigger the behaviour of Figure 12 in a given mobile station.
Numerous modifications and variations of the present application are possible in light of the above teachings. It is therefore to be understood that within the scope of the appended claims, the application may be practised otherwise than as specifically described herein.

## Claims

1. Method for CDMA packet data services of registering or reconnecting a mobile communication unit (33) comprising:
observing (9-2, 12-1) network infrastructure behaviour of a defined type indicative of whether a traffic channel is established in response to a packet data service reconnect and recording (9-3, 12-1) the behaviour, the packet data service reconnect involving transmission of an origination message with Packet Data Service option and Data Ready to send bit set to zero; and
in response to occurrence of an event triggering access network registration (10-1, 12-2) with a network infrastructure, selecting (10-2, 10-3, 10-4, 10-7, 10-8, 12-3), as a function of previously recorded network infrastructure behaviour, between performing an access network registration (10-6) and performing a reconnect with implicit registration (10-5)

2. The method of claim 1 wherein observing (9-2, 12-1) the network infrastructure behaviour comprises:
observing (9-2, 12-1) on a per-visited packet data service reconnect zone basis whether or not the network infrastructure established a traffic channel in response to a packet data service reconnect when there was no data to send.

3. The method of claim 1 or claim 2 further comprising:
upon occurrence of an event triggering access network registration (10-1)with a network infrastructure, if it has been determined (10-7) that the network infrastructure did not previously establish a traffic channel in response to a packet data service reconnect, performing a packet data service reconnect with implicit registration (10-5) if any one of at least one circumstance (10-3, 10-4) is satisfied, the at least one circumstance (10-3, 10-4) comprising one or more circumstances (10-3, 10-4) that on their own would not trigger packet data service reconnect (10-6);
the at least one circumstance (10-3, 10-4) comprising one or more of:
a change in packet data service reconnect zone (10-3);
no change in packet data service reconnect zone (10-3) and a current packet data service reconnect zone was previously visited (10-4) within a defined period of time.
if none of the at least one circumstance is satisfied, performing an access network registration.

4. The method of claim 1 or claim 2 further comprising:
upon occurrence of an event triggering access network registration (10-1) with the network infrastructure in a packet data service reconnect zone, if it has been determined (10-7) that the network infrastructure did previously establish a traffic channel in response to a packet data service reconnect and that a packet data service reconnect may be required within a short time period (10-8), performing a packet data service reconnect with implicit registration (10-5) if any one of at least one circumstance (10-3, 10-4) is satisfied, the at least one circumstance (10-3, 10-4) comprising one or more circumstances (10-3, 10-4) that on their own would not trigger packet data service reconnect (10-6),
the at least one circumstance (10-3, 10-4) comprises one or more of:
a change in packet data service reconnect zone (10-3);
no change in packet data service reconnect zone (10-3) and a current packet data service reconnect zone was previously visited (10-4) within a defined period of time.

5. The method of any one of claims 1 to 4 comprising:
categorizing (8-2) the event (8-1) into one of two categories taking into account the recorded network infrastructure behaviour (12-1) for a current packet data service reconnect zone;
for a first of the two categories performing an access network registration (8-3); and
for a second of the two categories performing the equivalent of an access network registration and a packet data reconnect by performing a data service reconnect with an implicit access network registration (8-5).

6. The method of any one of claims 1 to 5 further comprising:
if the access network registration is of any one of a first set of defined types (3-2), and if the mobile station determines that an access network registration is required to a base station for which a packet zone hysteresis timer is active (3-4) in a packet zone list:
modifying (3-3) the packet zone list to reflect that the current zone is the most recent zone;
initiating (3-3) a packet zone based reconnection by sending an Origination Message.

7. The method of claim 6 further comprising:
cancelling (3-3) the packet zone hysteresis timer.

8. The method of claim 6 or claim 7 further comprising:
if the access network registration is of any one of a second set of defined types (3-2), and if the mobile station determines that an access network registration is required to a base station for which a packet zone hysteresis timer is active in the packet zone list:
performing (3-5) the access network registration;
modifying the packet zone list to reflect that the current zone is the most recent zone;
initiating a packet zone based reconnection by sending an Origination Message.

9. The method of any one of claims 6 to 8 wherein the first set of defined types comprises at least one of timer-based, zone-based, parameter-change, distance-based, and user zone-based.

10. The method of claim 8 wherein first set of defined types comprises at least one of timer-based, zone-based, parameter-change, distance-based, and user zone-based and the second set of defined types comprises at least one of encryption re-sync required, or BCMC Registration.

11. The method of any one of claims 1 to 10 wherein network behaviour is recorded (9-3, 12-1) for previously visited packet data service reconnect zones each represented by a respective SID/NID/PZID.

12. A mobile communication unit (33) adapted to implement the method of any one of claims 1 to 11.

13. The mobile unit (33) of claim 12 further comprising a coordinated registration and reconnect function.

14. A mobile communications system comprising at least one mobile unit (33) according to claim 12 or claim 13.

15. A computer programme product comprising a readable medium (35) having instructions stored thereon adapted for implementing a method according to any one of claims 1 to 11, when run on the mobile unit of claim 12 or 13.

## Patentansprüche

1. Verfahren für CDMA-Paketdatendienste zur Registrierung oder Wiederverbindung eines mobilen Kommunikationsgeräts (33), umfassend:
das Beobachten (9-2, 12-1) des Netzwerkinfrastrukturverhaltens eines definierten Typs, der anzeigt, ob ein Verkehrskanal als Reaktion auf eine Paketdatendienst-Wiederverbindung eingerichtet wurde, und das Aufzeichnen (9-3, 12-1) des Verhaltens, wobei die Paketdatendienst-Wiederverbindung die Übertragung einer Ursprungsnachricht mit Paketdatendienstoption und Data-Ready-to-Send-Bit auf null gesetzt einschließt; und
als Reaktion auf das Auftreten einer ereignisauslösenden Zugangsnetzwerkregistrierung (10-1, 12-2) bei einer Netzwerkinfrastruktur das Auswählen (10-2, 10-3, 10-4, 10-7, 10-8, 12-3) als eine Funktion des zuvor aufgezeichneten Netzwerkinfrastrukturverhaltens zwischen dem Durchführen einer Zugangsnetzregistrierung (10-6) und dem Durchführen einer Wiederverbindung mit impliziter Registrierung (10-5).

2. Das Verfahren gemäß Anspruch 1, wobei das Beobachten (9-2, 12-1) des Netzwerkinfrastrukturverhaltens umfasst:
das Beobachten (9-2, 12-1) auf der Basis der jeweils besuchten Paketdatendienst-Wiederverbindungszone, ob die Netzwerkinfrastruktur als Reaktion auf eine Paketdatendienst-Wiederverbindung einen Verkehrskanal eingerichtet hat, wenn es keine Daten zum Senden gab.

3. Das Verfahren gemäß Anspruch 1 oder Anspruch 2, ferner umfassend:
beim Auftreten einer ereignisauslösenden Zugangsnetzwerkregistrierung (10-1) bei einer Netzwerkinfrastruktur, wenn ermittelt wurde (10-7), dass die Netzwerkinfrastruktur zuvor keinen Verkehrskanal als Reaktion auf eine Paketdatendienst-Wiederverbindung eingerichtet hat, das Durchführen einer Paketdatendienst-Wiederverbindung mit impliziter Registrierung (10-5), wenn einer von mindestens einem Sachverhalt (10-3, 10-4) zutrifft,
wobei der mindestens eine Sachverhalt (10-3, 10-4) einen oder mehrere Sachverhalte (10-3, 10-4) umfasst, die für sich allein keine Paketdatendienst-Wiederverbindung (10-6) auslösen würden;
wobei der mindestens eine Sachverhalt (10-3, 10-4) einen oder mehrere der folgenden umfasst:
eine Änderung bei der Paketdatendienst-Wiederverbindungszone (10-3);
keine Änderung bei der Paketdatendienst-Wiederverbindungszone (10-3), und eine aktuelle Paketdatendienst-Wiederverbindungszone wurde zuvor innerhalb einer definierten Zeitspanne besucht (10-4);
und wenn keiner von dem mindestens einen Sachverhalte zutrifft, das Durchführen einer Zugangsnetzwerkregistrierung.

4. Das Verfahren gemäß Anspruch 1 oder Anspruch 2, ferner umfassend:
beim Auftreten einer ereignisauslösenden Zugangsnetzwerkregistrierung (10-1) bei einer Netzwerkinfrastruktur in einer Paketdatendienst-Wiederverbindungszone, wenn ermittelt wurde (10-7), dass die Netzwerkinfrastruktur zuvor einen Verkehrskanal als Reaktion auf eine Wiederverbindung eines Paketdatendienstes eingerichtet hat und dass möglicherweise eine Paketdatendienst-Wiederverbindung innerhalb einer kurzen Zeitspanne erforderlich ist (10-8), das Durchführen einer Paketdatendienst-Wiederverbindung mit impliziter Registrierung (10-5), wenn einer von mindestens einem Sachverhalt (10-3, 10-4) zutrifft, wobei der mindestens eine Sachverhalt (10-3, 10-4) einen oder mehrere Sachverhalte (10-3, 10-4) umfasst, die für sich allein keine Paketdatendienst-Wiederverbindung (10-6) auslösen würden,
wobei der mindestens eine Sachverhalt (10-3, 10-4) einen oder mehrere der folgenden umfasst:
eine Änderung bei der Paketdatendienst-Wiederverbindungszone (10-3);
keine Änderung bei der Paketdatendienst-Wiederverbindungszone (10-3), und eine aktuelle Paketdatendienst-Wiederverbindungszone wurde zuvor innerhalb einer definierten Zeitspanne besucht (10-4).

5. Das Verfahren gemäß jedem der Ansprüche 1 bis 4, umfassend:
das Kategorisieren (8-2) des Ereignisses (8-1) in eine von zwei Kategorien unter Berücksichtigung des aufgezeichneten Netzwerkinfrastrukturverhaltens (12-1) für eine aktuelle Paketdatendienst-Wiederverbindungszone;
für eine erste der beiden Kategorien das Durchführen einer Zugangsnetzwerkregistrierung (8-3); und
für eine zweite der beiden Kategorien das Durchführen des Äquivalents einer Zugangsnetzwerkregistrierung und einer Paketdaten-Wiederverbindung durch Durchführung einer Datendienst-Wiederverbindung mit einer impliziten Zugangsnetzwerkregistrierung (8-5).

6. Das Verfahren gemäß jedem der Ansprüche 1 bis 5, ferner umfassend:
wenn die Zugangsnetzwerkregistrierung einem Typ aus einem ersten Set von definierten Typen entspricht (3-2), und wenn die Mobilstation ermittelt, dass eine Zugangsnetzwerkregistrierung bei einer Basisstation erforderlich ist, für die in einer Paketzonenliste ein Paketzonen-Hysteresis-Timer aktiv ist (3-4) :
das Modifizieren (3-3) der Paketzonenliste, um widerzuspiegeln, dass die aktuelle Zone die neueste Zone ist;
das Initiieren (3-3) einer paketzonenbasierten Wiederverbindung durch Senden einer Ursprungsnachricht.

7. Das Verfahren gemäß Anspruch 6, ferner umfassend:
das Abbrechen (3-3) des Paketzonen-Hysteresis-Timers.

8. Das Verfahren gemäß Anspruch 6 oder Anspruch 7, ferner umfassend:
wenn die Zugangsnetzwerkregistrierung einem Typ aus einem zweiten Set von definierten Typen entspricht (3-2), und wenn die Mobilstation ermittelt, dass eine Zugangsnetzwerkregistrierung bei einer Basisstation erforderlich ist, für die in einer Paketzonenliste ein Paketzonen-Hysteresis-Timer aktiv ist:
das Durchführen (3-5) der Zugangsnetzwerkregistrierung;
das Modifizieren der Paketzonenliste, um widerzuspiegeln, dass die aktuelle Zone die neueste Zone ist;
das Initiieren einer paketzonenbasierten Wiederverbindung durch Senden einer Ursprungsnachricht.

9. Das Verfahren gemäß jedem der Ansprüche 6 bis 8, wobei das erste Set von definierten Typen mindestens einen der Typen timerbasiert, zonenbasiert, parametergeändert, distanzbasiert und benutzerzonenbasiert umfasst.

10. Das Verfahren gemäß Anspruch 8, wobei das erste Set von definierten Typen mindestens einen der Typen timerbasiert, zonenbasiert, parametergeändert, distanzbasiert und benutzerzonenbasiert umfasst und das zweite Set von definierten Typen mindestens einen der Typen Verschlüsselungsneusynchronisierung erforderlich oder BCMC-Registrierung umfasst.

11. Das Verfahren gemäß jedem der Ansprüche 1 bis 10, wobei das Aufzeichnen des Netzwerkverhaltens (9-3, 12-1) für zuvor besuchte Paketdatendienst-Wiederverbindungszonen erfolgt, die jeweils durch eine entsprechende SID/NID/PZID repräsentiert werden.

12. Ein mobiles Kommunikationsgerät (33), das zur Implementierung des Verfahrens gemäß jedem der Ansprüche 1 bis 11 angepasst ist.

13. Das Mobilgerät (33) gemäß Anspruch 12, ferner umfassend eine koordinierte Registrierungs- und Wiederverbindungsfunktion.

14. Ein mobiles Kommunikationssystem, umfassend mindestens ein Mobilgerät (33) gemäß Anspruch 12 oder Anspruch 13.

15. Ein Computerprogrammprodukt, umfassend ein lesbares Medium (35), auf dem Anweisungen gespeichert sind, die zur Implementierung eines Verfahrens gemäß jedem der Ansprüche 1 bis 11 angepasst sind, wenn sie auf dem Mobilgerät gemäß Anspruch 12 oder Anspruch 13 ausgeführt werden.

## Revendications

1. Procédé pour l'enregistrement ou la reconnexion de services de paquets de données AMRC dans une unité de communication mobile (33), comportant :
observer (9-2, 12-1) un comportement d'infrastructure de réseau d'un type défini indiquant si un canal de trafic est établi en réponse à une reconnexion de service de paquets de données et enregistrer (9-3, 12-1) le comportement, la reconnexion de service de paquets de données impliquant la transmission d'un message d'origine avec option de service de paquets de données et bit de données prêtes à envoyer réglé à zéro ; et
en réponse à l'occurrence d'un événement déclencheur d'enregistrement de réseau d'accès (10-1, 12-2) auprès d'une infrastructure de réseau, sélectionner (10-2, 10-3, 10-4, 10-7, 10-8, 12-3), en fonction d'un comportement d'infrastructure de réseau précédemment enregistré, entre effectuer un enregistrement de réseau d'accès (10-6) et effectuer une reconnexion avec enregistrement implicite (10-5).

2. Le procédé de la revendication 1, dans lequel l'observation (9-2, 12-1) du comportement d'infrastructure de réseau comporte :
observer (9-2, 12-1), sur la base de chaque zone de reconnexion de service de paquets de données visitée, si l'infrastructure de réseau a établi ou non un canal de trafic en réponse à une reconnexion de service de paquets de données quand aucune donnée n'a été envoyée.

3. Le procédé de la revendication 1 ou de la revendication 2, comportant de plus :
à l'occurrence d'un événement déclencheur d'enregistrement de réseau d'accès (10-1) auprès d'une infrastructure de réseau, s'il a été déterminé (10-7) que l'infrastructure de réseau n'a pas précédemment établi un canal de trafic en réponse à une reconnexion de service de paquets de données, effectuer une reconnexion de service de paquets de données avec enregistrement implicite (10-5) si au moins une condition parmi au moins une condition (10-3, 10-4) est remplie, l'au moins une condition (10-3, 10-4) comportant une ou plusieurs conditions (10-3, 10-4) qui individuellement ne déclencherait pas de reconnexion de service de paquets de données (10-6) ;
l'au moins une condition (10-3, 10-4) comportant un ou plusieurs événements parmi :
un changement dans une zone de reconnexion de service de paquets de données (10-3) ;
aucun changement dans une zone de reconnexion de service de paquets de données' (10-3) et une zone de reconnexion de service de paquets de données actuelle a été précédemment visitée (10-4) dans une période définie.
si aucune de l'au moins une condition n'est remplie, effectuer un enregistrement de réseau d'accès.

4. Le procédé de la revendication 1 ou de la revendication 2, comportant de plus :
à l'occurrence d'un événement déclencheur d'enregistrement de réseau d'accès (10-1) auprès de l'infrastructure de réseau dans une zone de reconnexion de paquets de données, s'il a été déterminé (10-7) que l'infrastructure de réseau a bien précédemment établi un canal de trafic en réponse à une reconnexion de service de paquets de données et qu'une reconnexion de service de paquets de données peut être requise dans un court délai (10-8), effectuer une reconnexion de service de paquets de données avec enregistrement implicite (10-5) si au moins une condition parmi au moins une condition (10-3, 10-4) est remplie, l'au moins une condition (10-3, 10-4) comportant une ou plusieurs conditions (10-3, 10-4) qui individuellement ne déclencherait pas de reconnexion de service de paquets de données (10-6),
l'au moins une condition (10-3, 10-4) comporte un ou plusieurs événements parmi :
un changement dans une zone de reconnexion de service de paquets de données (10-3) ;
aucun changement dans une zone de reconnexion de service de paquets de données (10-3) et une zone de reconnexion de service de paquets de données actuelle a été précédemment visitée (10-4) dans une période définie.

5. Le procédé de n'importe laquelle des revendications 1 à 4, comportant:
catégoriser (8-2) l'événement (8-1) dans une catégorie parmi deux catégories en tenant compte du comportement d'infrastructure de réseau enregistré (12-1) pour une zone de reconnexion de service de paquets de données actuelle ;
pour une première des deux catégories, effectuer un enregistrement de réseau d'accès (8-3) ; et
pour une deuxième des deux catégories, effectuer l'équivalent d'un enregistrement de réseau d'accès et une reconnexion de paquets de données en effectuant une reconnexion de service de données avec un enregistrement de réseau d'accès implicite (8-5).

6. Le procédé de n'importe laquelle des revendications 1 à 5, comportant de plus :
si l'enregistrement de réseau d'accès appartient à un ensemble parmi un premier ensemble de types définis (3-2), et si la station mobile détermine qu'un enregistrement de réseau d'accès est requis à une station de base pour laquelle un minuteur d'hystérésis de zone de paquets est actif (3-4) dans une liste de zones de paquets :
modifier (3-3) la liste de zones de paquets afin de faire apparaître que la zone actuelle est la zone la plus récente ;
amorcer (3-3) une reconnexion basée zone de paquets en envoyant un message d'origine.

7. Le procédé de la revendication 6, comportant de plus :
annuler (3-3) le minuteur d'hystérésis de zone de paquets.

8. Le procédé de la revendication 6 ou de la revendication 7, comportant de plus :
si l'enregistrement de réseau d'accès appartient à un ensemble parmi un deuxième ensemble de types définis (3-2), et si la station mobile détermine qu'un enregistrement de réseau d'accès est requis à une station de base pour laquelle un minuteur d'hystérésis de zone de paquets est actif dans la liste de zones de paquets :
effectuer (3-5) l'enregistrement de réseau d'accès;
modifier la liste de zones de paquets afin de faire apparaître que la zone actuelle est la zone la plus récente ;
amorcer une reconnexion basée zone de paquets en envoyant un message d'origine.

9. Le procédé de n'importe laquelle des revendications 6 à 8, dans lequel le premier ensemble de types définis comporte au moins un type parmi les types basé minuteur, basé zone, changement de paramètre(s), basé distance, et basé zone d'utilisateur.

10. Le procédé de la revendication 8, dans lequel le premier ensemble de types définis comporte au moins un type parmi les types basé minuteur, basé zone, changement de paramètre(s), basé distance, et basé zone d'utilisateur et le deuxième ensemble de types définis comporte au moins un type parmi les types resynchronisation de cryptage requise, ou enregistrement diffusion multi-diffusion (BCMC).

11. Le procédé de n'importe laquelle des revendications 1 à 10, dans lequel un comportement de réseau est enregistré (9-3, 12-1) pour des zones de reconnexion de service de paquets de données précédemment visitées, chacune représentée par un numéro d'identification système (SID), réseau (NID), zone de paquets (PZID) respectif.

12. Une unité de communication mobile (33) adaptée pour implémenter le procédé de n'importe laquelle des revendications 1 à 11.

13. L'unité mobile (33) de la revendication 12, comportant de plus une fonction d'enregistrement et de reconnexion coordonnés.

14. Un système de communication mobile comportant au moins une unité mobile (33) selon la revendication 12 ou la revendication 13.

15. Un produit de programme informatique comportant un support lisible (35) ayant des instructions stockées sur celui-ci adaptées pour implémenter une procédé selon n'importe laquelle des revendications 1 à 11, quand il est exécuté sur l'unité mobile de la revendication 12 ou 13.
